# EUROPÄISCHE PATENTSCHRIFT

(11) **EP 1 035 358 B1**
(45) Veröffentlichungstag und Bekanntmachung des Hinweises auf die Patenterteilung: **28.04.2004**
(21) Anmeldenummer: 00102187.2
(22) Anmeldetag: 09.02.2000
(51) Int. Cl.: F16H 63/48

(54) **Parksperre für ein Schaltgetriebe**
Parking lock mechanism for a gearbox
Frein de stationnement pour une boîte de vitesses

(30) Priorität: 10.03.1999 DE 19910576
(43) Veröffentlichungstag der Anmeldung: 13.09.2000
(73) Patentinhaber: Volkswagen Aktiengesellschaft, 38436 Wolfsburg (DE)
(72) Erfinder: Müller, Matthias, 38559 Wagenhoff (DE); Franz, Reinhold, 38518 Gifhorn (DE)
(74) Vertreter: Lindner, Manfred Klaus, Dipl.-Phys.

(56) Entgegenhaltungen:
- DE-A- 1 800 164
- DE-A- 3 825 286
- US-A- 3 301 078
- US-A- 4 409 858

## Beschreibung

Die vorliegende Erfindung betrifft eine Parksperre für ein Schaltgetriebe nach dem Oberbegriff des Anspruchs 1 und bezieht sich insbesondere auf eine Parksperre für ein automatisiertes Schaltgetriebe.

Parksperren ganz allgemein sind bereits bekannt geworden und zwar an Fahrzeugen mit einem hydrodynamischen Drehmomentwandler, denn bei diesem entfällt die Möglichkeit, eine Verbindung vom Fahrzeug zum Motor mit seiner Bremskraft herzustellen. Parksperren verhindern ganz allgemein ein unbeabsichtigtes Rollen des Fahrzeugs, wobei zu diesem Zweck bei bekannten Parksperren eine Sperrklinke die Abtriebswelle des Getriebes blockiert. Aufgrund der bei einer solchen Sperrklinke auftretenden hohen Flächenpressung zwischen der Sperrklinke und einem Parksperrenrad ist es erforderlich, diese Eingriffsmittel mit einer Wärmebehandlung zu bearbeiten, um sie für hohe Belastungen auszugestalten.

Aus der DE 38 25 286 A1 ist bereits eine Parksperre für ein Schaltgetriebe bekannt geworden, bei dem ein Parksperrenrad mit einer daran angeordneten Sperrverzahnung mit einem an der Abtriebswelle konzentrisch angeordneten Gegensperrglied zur Blockierung der Abtriebswelle in Eingriff gebracht werden kann. Bei dem vorstehend beschriebenen Schaltgetriebe handelt es sich um ein selbsttätig schaltendes Gangwechselgetriebe, das heißt also um einen Stufenautomaten.

Ein solcher Stufenautomat ist ein unter Last schaltbares Gangwechselgetriebe, welches zwar für einen hohen Komfort beim Benutzer sorgt, aber auch mit höheren Kosten verglichen mit einem bekannten Schaltgetriebe verbunden ist.

Aufgrund dieser Situation sind auch bereits automatisierte Schaltgetriebe bekannt geworden, die den Fahrer beim Vorgang der Betätigung der Kupplung und beim eigentlichen Gangwechselvorgang entlasten, da diese Vorgänge von Betätigungseinrichtungen in der Form von beispielsweise hydraulischen Stellgliedern durchgeführt werden.

Der vorliegenden Erfindung liegt nun die Aufgabe zugrunde, eine Parksperre für ein Schaltgetriebe, insbesondere ein automatisiertes Schaltgetriebe zu schaffen.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Nach der Erfindung ist daher eine Parksperre für ein Schaltgetriebe mit einer in einem Getriebegehäuse drehbar gelagerten Abtriebswelle und einer zur Abtriebswelle konzentrischen, an einem Parksperrenrad angeordneten Sperrverzahnung vorgesehen, die mit einer an einem konzentrisch zur Abtriebswelle angeordneten Gegensperrglied vorgesehenen Gegenverzahnung zur Blockierung der Abtriebswelle in Eingriff gebracht werden kann, wobei das Gegensperrglied eine Schaltmuffe mit einer Innenverzahnung ist, die mit der Sperrverzahnung über eine Betätigungseinrichtung in Eingriff gebracht werden kann. Es kann also die Sperrverzahnung am Parksperrenrad mit der Innenverzahnung der Schaltmuffe über eine Betätigungseinrichtung in der Form von beispielsweise eines elektrohydraulischen Stellglieds so in Eingriff gebracht werden, daß die Abtriebswelle des Schaltgetriebes damit blockiert werden kann. Die Betätigungseinrichtung kann auch eine über den Wählhebel oder Schalthebel des Getriebes vom Fahrer direkt betätigter Hebel oder dergleichen sein.

Das Parksperrenrad kann dabei mittels einer Innenverzahnung drehfest und axial verschieblich an einer Radaufnahme mit einer Außenverzahnung angeordnet und über eine Druckfeder vorgespannt mit der Innenverzahnung der Schaltmuffe in Eingriff gebracht werden.

Die Radaufnahme kann einen Führungszapfen aufweisen, der in einer Bohrung in der Abtriebswelle zentriert aufgenommen wird, wobei zu diesem Zweck zwischen dem Zapfen und der Bohrung eine Buchse vorgesehen werden kann, die eine Relativbewegung zwischen dem Zapfen und der Abtriebswelle gestattet.

Die Parksperre nach der Erfindung zeichnet sich insbesondere dadurch aus, daß sie an einem Schaltgetriebe als vormontiertes Bauteil nachträglich angebracht werden kann und zwar indem sie in einem vorhandenen Aufnahmeraum des Getriebegehäuses zum Eingriff mit einer Schaltmuffe angeordnet wird und die Schaltmuffe beziehungsweise ihre Innenverzahnung über einen Wählhebel betätigt mit der Sperrverzahnung am Parksperrenrad in Eingriff gebracht werden kann. Ein Benutzer des mit einem beispielsweise automatisierten Schaltgetriebe mit der erfindungsgemäßen Parksperre ausgestatteten Kraftfahrzeuges kann den Wählhebel oder Schalthebel des Getriebes in eine Stellung bringen, in der die Betätigungseinrichtung die Schaltmuffe so verschiebt, daß die Innenverzahnung der Schaltmuffe mit der Sperrverzahnung am Parksperrenrad zur Blockierung der Abtriebswelle des Getriebes in Eingriff gebracht werden kann.

Aufgrund der Vorspannung des Parksperrenrades über die Druckfeder kann ein Eingriff zwischen der Innenverzahnung der Schaltmuffe und der Sperrverzahnung an dem Parksperrenrad auch dann realisiert werden, wenn es zu einer Stellung Zahn auf Zahn kommen sollte, da eine kleine Relativbewegung des Fahrzeuges für eine geringfügige Drehung der Abtriebswelle sorgt, so daß die Verzahnung am Parksperrenrad mit der Verzahnung an der Schaltmuffe nach der kleinen Drehung der Abtriebswelle in Eingriff kommt und damit eine weitere Drehung der Abtriebswelle durch den Eingriff zwischen der Innenverzahnung der Schaltmuffe und der Sperrverzahnung des Parksperrenrades unterbunden wird.

Obwohl die Erfindung vorstehend anhand eines automatisierten Schaltgetriebes erläutert worden ist, kann die Parksperre selbstverständlich auch an einem Handschaltgetriebe vorgesehen werden und somit eine zusätzliche Sicherheit des mit dem Getriebe ausgestatteten Fahrzeuges gegen Wegrollen erreicht werden.

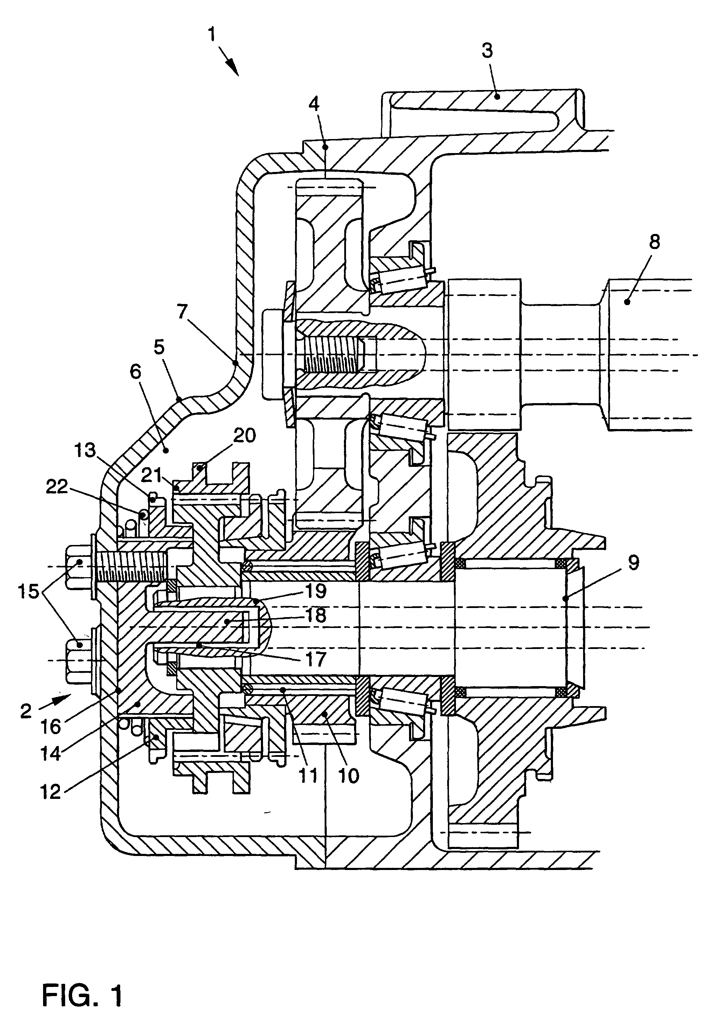

Die Erfindung wird im folgenden anhand der Zeichnung näher erläutert. Diese zeigt in der einzigen Figur ein ganz allgemein mit dem Bezugszeichen 1 bezeichnetes Schaltgetriebe mit einer mit dem Bezugszeichen 2 bezeichneten Parksperre. Das Schaltgetriebe 1 besitzt ein Getriebegehäuse 3, an dem eine Trennfläche 4 über einen Deckel 5 verschlossen ist. Unterhalb des Deckel 5 befindet sich ein Aufnahmeraum 6, in dem die Parksperre 2 angeordnet werden kann. Anhand dieser Darstellung wird ersichtlich, daß die Parksperre 2 an einem vorhandenen Schaltgetriebe 1 angebracht werden kann, ohne daß hierzu entsprechende umfangreiche Änderungen am Schaltgetriebe 1 notwendig werden würden.

Anstelle eines von dem Bezugspunkt 7 ausgehenden in Richtung nach unten geradlinig verlaufenden Deckels wird ein den Aufnahmeraum 6 beinhaltender Deckel 5 am Schaltgetriebe 1 angeordnet, so daß zur Nachrüstung eines vorhandenen Getriebes nur ein entsprechender neuer Deckel 5 gefertigt werden muß. Ganz allgemein kann daher die Parksperre 2 an einem bereits bestehenden Schaltgetriebe 1 in dem gedachten Bauraum an der Abtriebswelle angeordnet werden, der für die Ergänzung des bekannten Schaltgetriebes 1 um eine weitere Gangstufe notwendig wäre.

Bei dem in der Zeichnung dargestellten Schaltgetriebe 1 handelt es sich um ein automatisiertes Schaltgetriebe mit fünf Gangstufen, so daß die Parksperre 2 in einem Bauraum angeordnet wird, der einem gedachten sechsten Gang entspricht.

Über eine im Gehäuse 3 gelagerte Antriebswelle 8 wird ein von einem nicht näher dargestellten Motor stammendes Moment in das Schaltgetriebe 1 eingeleitet, und kann nach einer entsprechenden Wandlung über eine Abtriebswelle 9 an den nachgeschalteten Triebstrang des mit dem Schaltgetriebe 1 ausgestatteten Kraftfahrzeuges übertragen werden.

Die Parksperre 2 befindet sich bei der Ausführungsform nach der Zeichnung an der Abtriebswelle 9 angeordnet und zwar in einem Bauraum für eine gedachte weitere Gangstufe, das heißt also bei dem in der Zeichnung dargestellten Schaltgetriebe 1 mit fünf Gangstufen in einem Bauraum für eine gedachte sechste Gangstufe.

Das Zahnrad 10 für die fünfte Gangstufe befindet sich an der Abtriebswelle 9 über ein Nadellager 11 drehbar angeordnet.

In der Zeichnungsebene links vom Zahnrad 10 für die fünfte Gangstufe befindet sich die Parksperre 2 konzentrisch zur Abtriebswelle 9. Die Parksperre 2 weist ein Parksperrenrad 12 mit einer als Außenverzahnung ausgebildeten Sperrverzahnung 13 auf.

Das Parksperrenrad 12 ist an einer Radaufnahme 14 in Form eines mit Schrauben 15 am Deckel 5 befestigten Deckels 16 drehfest festgelegt, so daß eine an der Parksperre 2 angreifende Kraftkomponente über die Radaufnahme 14 und die Schrauben 15 am Deckel 5 abgestüzt wird. Die Radaufnahme 14 wird über einen Zapfen 18, der in einer Buchse 17 in einer Bohrung 19 in der Abtriebswelle 9 gelagert wird, konzentrisch zur Abtriebswelle 9 aufgenommen. Die Parksperre 2 kann daher vormontiert und von außen über eine entsprechende Öffnung in den Deckel 5 eingesetzt werden.

Wenn der Fahrer des mit dem Schaltgetriebe 1 mit der Parksperre 2 ausgestatteten Kraftfahrzeuges eine Sicherung seines Fahrzeuges gegen Rollen herbeiführen möchte, dann betätigt er den Wählhebel oder Schalthebel seines Fahrzeuges beispielsweise in eine mit P bezeichnete Stellung, die eine elektrohydraulischen Stelleinrichtung so ansteuert, daß diese die Schaltmuffe 20 der fünften Gangstufe in der Zeichnungsebene in Richtung nach links verschiebt, so daß die Innenverzahnung 21 der Schaltmuffe 20 mit der Sperrverzahnung 13 des Parksperrenrades 12 in Eingriff kommt.

Wenn die beiden Verzahnungen, das heißt also die Innenverzahnung 21 der Schaltmuffe 20 und die Außenverzahnung 13 des Parksperrenrades 12 eine Stellung Zahn auf Zahn aufweisen sollten, das heißt also ein Eingriff der beiden Verzahnungen bei dieser Stellung gerade nicht möglich ist, dann sorgt eine Druckfeder 22 in der Form einer konischen Feder dafür, daß bei einer kleinen Relativbewegung der Abtriebswelle 9 und damit der Schaltmuffe 20 bezüglich des Parksperrenrades 13 die Außenverzahnung 13 in die Innenverzahnung 21 der Schaltmuffe 20 eingreift und somit nach dieser kleinen Relativbewegung eine Blockierung der Abtriebswelle 9 über die Außenverzahnung 13 des Parksperrenrades 12 herbeigeführt wird.

Obwohl die Parksperre 2 anhand eines in der Zeichnung dargestellten automatisierten Schaltgetriebes 1 beschrieben worden ist, ist es für den Fachmann jedoch ohne weiteres ersichtlich, daß anstelle eines automatisierten Schaltgetriebes 1 auch eine Anwendung der Parksperre 2 an einem gewöhnlichen vom Fahrer des Fahrzeuges zu schaltenden Handschaltgetriebe erfolgen kann, um ein Wegrollen des Fahrzeuges über eine Blockierung der Abtriebswelle 9 sicher zu verhindern.

Hinsichtlich vorstehend im einzelnen nicht näher erläuterter Merkmale der Erfindung wird im übrigen ausdrücklich auf die Ansprüche und die Zeichnung verwiesen.

### BEZUGSZEICHENLISTE

- 1: Schaltgetriebe
- 2: Parksperre
- 3: Getriebegehäuse
- 4: Trennfläche
- 5: Deckel
- 6: Aufnahmeraum
- 7: Bezugspunkt
- 8: Antriebswelle
- 9: Abtriebswelle
- 10: Zahnrad
- 11: Nadellager
- 12: Parksperrenrad
- 13: Sperrverzahnung
- 14: Radaufnahme
- 15: Schrauben
- 16: Deckel
- 17: Buchse
- 18: Zapfen
- 19: Bohrung
- 20: Schaltmuffe
- 21: Innenverzahnung
- 22: Druckfeder

## Patentansprüche

1. Parksperre für ein Schaltgetriebe (1) mit einer in einem Getriebegehäuse (3) drehbar gelagerten Abtriebswelle (9) und einer zur Abtriebswelle (9) konzentrischen, an einem Parksperrenrad (12) angeordneten Sperrverzahnung (13), die mit einer an einem konzentrisch zur Abtriebswelle (9) angeordneten Gegensperrglied (20) vorgesehenen Gegenverzahnung (21) zur Blockierung der Abtriebswelle (9) in Eingriff bringbar ist, **dadurch gekennzeichnet, dass** das Parksperrenrad (12) zusätzlich zu den Gangstufen des Schaltgetriebes (1) und in dem Getriebegehäuse (3) ortsfest angeordnet ist, und dass das Gegensperrglied eine Schaltmuffe (20) mit einer Innenverzahnung (21) ist, die mit der Sperrverzahnung (13) über eine Betätigungseinrichtung in Eingriff bringbar ist.

2. Parksperre nach Anspruch 1, **dadurch gekennzeichnet, daß** das Schaltgetriebe (1) ein automatisiertes Schaltgetriebe oder ein Handschaltgetriebe ist.

3. Parksperre nach Anspruch 1 oder 2, **dadurch gekennzeichnet, daß** die Betätigungseinrichtung ein elektrohydraulisches Stellglied oder eine manuell betätigte mechanische Stelleinrichtung ist.

4. Parksperre nach einem der Ansprüche 1 bis 3, **dadurch gekennzeichnet, daß** das Parksperrenrad (12) mittels einer Innenverzahnung drehfest axial verschieblich an einer eine Außenverzahnung aufweisenden Radaufnahme (14) angeordnet und über eine Druckfeder (22) vorgespannt mit der Innenverzahnung (21) der Schaltmuffe (20) in Eingriff bringbar ist.

5. Parksperre nach Anspruch 4, **dadurch gekennzeichnet, daß** die Radaufnahme (14) einen Führungszapfen (18) aufweist, der über eine eine Relativbewegung zwischen dem Zapfen (18) und der Abtriebswelle (9) gestattende Buchse (17) in der Abtriebswelle (9) zentriert aufgenommen ist.

6. Parksperre nach einem der Ansprüche 1 bis 5, **dadurch gekennzeichnet, daß** sie an dem Schaltgetriebe (1) als vormontiertes Bauteil in einem vorhandenen Aufnahmeraum (6) des Getriebegehäuses (3) zum Eingriff mit einer Schaltmuffe (20) angeordnet ist und die Innenverzahnung (21) der Schaltmuffe (20) über einen Wählhebel betätigt mit der Sperrverzahnung (13) in Eingriff gebracht wird.

## Claims

1. Parking lock for a gear-shift transmission (1) with an output shaft (9) mounted rotatably in a transmission case (3) and with a locking toothing (13) which is concentric to the output shaft (9) and is arranged on a parking-lock wheel (12) and which, in order to block the output shaft (9) can be brought into engagement with a counter toothing (21) provided on a counterlocking member (20) arranged concentrically to the output shaft (9), **characterized in that** the parking-lock wheel (12) is fixedly arranged in addition to the gearsteps of the gear-shift transmission (1) and in the transmission case (3), and **in that** the counterlocking member is a sliding sleeve (20) with an internal toothing (21) which can be brought into engagement with the locking toothing (13) via an actuating device.

2. Parking lock according to Claim 1, **characterized in that** the gear-shift transmission (1) is an automated gear-shift transmission or a manual gear-shift transmission.

3. Parking lock according to Claim 1 or 2, **characterized in that** the actuating device is an electrical hydraulic actuator or a manually actuated mechanical actuator.

4. Parking lock according to one of Claims 1 to 3, **characterized in that** the parking-lock wheel (12) is arranged by means of an internal toothing fixedly in terms of rotation and axially displaceably on a wheel receptacle (14) having an external toothing and, prestressed via a compression spring (22), can be brought into engagement with the internal toothing (21) of the sliding sleeve (20).

5. Parking lock according to Claim 4, **characterized in that** the wheel receptacle (14) has a guide pin (18) which is received in a centered manner in the output shaft (9) via a bush (17) allowing relative movement between the pin (18) and the output shaft (9).

6. Parking lock according to one of Claims 1 to 5, **characterized in that** it is arranged as a preassembled structural part on the gear-shift transmission (1) in an existing reception space (6) of the transmission case (3) for engagement with a sliding sleeve (20), and, actuated via a selector lever, the internal toothing (21) of the sliding sleeve (20) is brought into engagement with the locking toothing (13).

## Revendications

1. Verrouillage de stationnement pour une boîte de vitesses (1) comprenant un arbre de sortie (9) monté rotatif dans un carter de boîte de vitesses (3) et une denture de verrouillage (13) concentrique à l'arbre de sortie (9) disposée sur une roue de verrouillage de stationnement (12), qui peut être amenée en engagement avec une denture conjuguée (21) prévue sur un organe de verrouillage conjugué (20) disposé concentriquement à l'arbre de sortie (9) afin de bloquer l'arbre de sortie (9), **caractérisé en ce que** la roue de verrouillage de stationnement (12) est prévue en plus des rapports de transmission de la boîte de vitesses (1) et est fixée dans le carter de la boîte de vitesses (3), et **en ce que** l'organe de verrouillage conjugué est un manchon de commande (20) avec une denture interne (21) qui peut être amené en engagement avec la denture de verrouillage (13) par le biais d'un dispositif d'actionnement.

2. Verrouillage de stationnement selon la revendication 1, **caractérisé en ce que** la boîte de vitesses (1) est une boîte de vitesses automatique ou une boîte de vitesses manuelle.

3. Verrouillage de stationnement selon la revendication 1 ou 2, **caractérisé en ce que** le dispositif d'actionnement est un organe de commande électro-hydraulique ou un dispositif de commande mécanique actionné manuellement.

4. Verrouillage de stationnement selon l'une quelconque des revendications 1 à 3, **caractérisé en ce que** la roue de verrouillage de stationnement (12) est disposée de manière déplaçable axialement et fixe en rotation au moyen d'une denture interne sur un logement de roue (14) présentant une denture externe et peut être amenée en engagement avec la denture interne (21) du manchon de commande (20) de manière précontrainte par le biais d'un ressort de pression (22).

5. Verrouillage de stationnement selon la revendication 4, **caractérisé en ce que** le logement de roue (14) présente un tourillon de guidage (18) qui est reçu dans l'arbre de sortie (9) de manière centrée par le biais d'une douille (17) conférant un mouvement relatif entre le tourillon (18) et l'arbre de sortie (9).

6. Verrouillage de stationnement selon l'une quelconque des revendications 1 à 5, **caractérisé en ce qu'**il est disposé sur la boîte de vitesses (1) sous forme d'un composant prémonté dans un espace de logement (6) prévu dans le carter de la boîte de vitesses (3) afin de venir en engagement avec un manchon de commande (20) et la denture interne (21) du manchon de commande (20) est amenée en engagement avec la denture de verrouillage (13) de manière commandée par le biais d'un levier de sélection.
